# EUROPÄISCHE PATENTSCHRIFT

(11) **EP 0 693 456 B1**
(45) Veröffentlichungstag und Bekanntmachung des Hinweises auf die Patenterteilung: **06.10.1999**
(21) Anmeldenummer: 95890138.1
(22) Anmeldetag: 19.07.1995
(51) Int. Cl.: C01B 21/076, C01B 21/082

(54) **Verfahren zur Herstellung von spärischen Nitrid- und/oder Carbonidpulvern des Titans**
Process for the preparation of spherical titanium nitrid and/or carbonitride powders
Procédé de préparation de poudres sphériques de nitrure et/ou carbonitrure de titane

(30) Priorität: 22.07.1994 AT 145794
(43) Veröffentlichungstag der Anmeldung: 24.01.1996
(73) Patentinhaber: Treibacher Industrie Aktiengesellschaft, A-9330 Treibach (AT)
(72) Erfinder: Zeiringer, Hans, A-9321 Kappel/Krappfeld (AT)
(74) Vertreter: Kliment, Peter, Dipl.-Ing.

(56) Entgegenhaltungen:
- EP-A- 0 447 388
- CHEMICAL ABSTRACTS, vol. 106, no. 8, Februar 1987 Columbus, Ohio, US; abstract no. 54761z, Y. SHIMIZU ET AL. 'Fine complex titanium-molybdenum carbonitride as a cutting tool precursor.' Seite 293;
- CHEMICAL ABSTRACTS, vol. 100, no. 12, März 1984 Columbus, Ohio, US; abstract no. 88114g, MITSUBISHI METAL 'Complex titanium-metal carbonitride solid solution powder.' Seite 136;

## Beschreibung

Die Erfindung betrifft ein Verfahren zur Herstellung von sphärischen Nitrid- und/oder Carbonitridpulvern des Titans und gegebenenfalls weiterer Metalle der IVa-, Va-, und VIa- Gruppe des Periodensystems mit engem Kornspektrum, einer Korngröße von durchschnittlich mehr als 2 µm.

Titannitrid, Titancarbonitrid und Titanmischcarbonitride finden überwiegend Anwendung in der Herstellung von Cermets-Schneidstoffen, Umformwerkzeugen und hochbeanspruchten Verschleißteilen. Als Cermets bezeichnet man metallkeramische Werkstoffe, in denen keramische Hartstoffkomponenten in einem Metallbinder eingebettet sind. Neben den diversen Nitriden, Carbonitriden und Mischcarbonitriden, wobei neben dem Titan noch ein oder mehrere Metalle der IVa-, Va- und VIa- Gruppe des Periodensystem enthalten sein können, enthalten viele Cermetssorten noch Carbide der Va- und VIa- Gruppe. Durch geeignete Kombination dieser Hartstoffe und Variation der Korngröße und Kornform der Hartstoffpartikel können die jeweils günstigsten Eigenschaften für verschiedene Anwendungsbereiche, wie spanabhebende Bearbeitung von Stahl, erzielt werden. So hat sich nach der EP 0 512 967 A2 herausgestellt, daß sich durch Einsatz von Carbonitridhartstoffen auf Titanbasis mit unterschiedlicher Korngröße hervorragende Eigenschaften für das Fräsen und Drehen erzielen lassen.

Für die Herstellung von Titannitrid, Titancarbonitrid und Titanmischcarbonitride sind verschiedene Verfahren bekannt geworden. Titancarbonitrid mit gegebenenfalls weiteren Zusätzen stellt man gegenwärtig überwiegend durch Reaktionsglühen einer Mischung bestehend aus Titancarbid und gegebenenfalls Zusätzen weiterer Carbide und/oder Metalle mit Kohlenstoff und Titannitrid unter Stickstoff bei Temperaturen um 1500 °C her. Eine weitere Methode besteht in der Umsetzung der entsprechenden Metallpulver mit Stickstoff, wobei auch Kohlenstoff zugefügt sein kann. Nach der schon 1925 von E. Friederich und L. Sittig untersuchten Reaktion von Titanoxid mit Kohlenstoff und Stickstoff erhält man ebenfalls Titannitrid mit mehr oder weniger hohem Kohlenstoffgehalt. Um ein Produkt mit einem Sauerstoffgehalt zwischen 0,3 und 1% zu erhalten sind erfahrungsgemäß Temperaturen um 2000 °C erforderlich. Das Produkt das aufgrund der hohen Reaktionstemperatur stark zusammengesintert ist, muß erst durch eine sehr aufwendige Mahlung auf die gewünschte Korngröße gebracht werden. Das Produkt ist in jedem Fall ein Pulver mit breitem Kornspektrum und splittrig kantiger Kornform.

In der AT 394 188 B bzw. der EP 0 447 388 A1 wird ein Verfahren beschrieben, das die Herstellung von feinkörnigen, sinteraktiven Nitrid- und Carbonitridpulver des Titans aus dem Oxid ermöglicht. Die nach diesem Verfahren gewonnen Nitrid- und Carbonitridpulver zeichnen sich bereits durch eine sphärische Kornform, Feinkörnigkeit und enges Kornspektrum aus. Als technisch mit diesem Verfahren nicht durchführbar hat sich allerdings die Herstellung von grobkörnigem Nitrid- und Carbonitridpulver mit sphärischer Kornform und engem Kornspektrum erwiesen.

Die Aufgabe der Erfindung ist es, ein Verfahren zur Herstellung eines sphärischen Nitrid und/oder Carbonitridpulvers mit engem Kornspektrum und einer durchschnittlichen Korngröße > 2 µm zu entwickeln.

Erfindungsgemäß wird die Aufgabe durch ein Verfahren gelöst, welches folgende Schritte enthält:
- Einbringen eines Reaktionsgemisches bestehend aus Titan und gegebenenfalls anderen Metalle der IVa-, Va- und VIa- Gruppe des Periodensystems in Form ihrer Oxide, Metalle, Carbide, Nitride und/oder Carbonitride und bei Bedarf einem kohlenstoffhältigen Stoff in den Reaktor;
- Herstellen einer Stickstoffatmosphäre im Reaktor bei vermindertem Druck;
- Erwärmen des Reaktorinhalts auf eine Temperatur zwischen 800 °C und 2400 °C, vorzugsweise zwischen 1400 °C und 2000 °C und Halten im Temperaturbereich zwischen 1400 °C und 2000 °C unter gleichzeitiger Abführung der gasförmigen Reaktionsprodukte, wobei Stickstoff oder ein stickstoffabgebendes Gas durch oder über die Reaktionsmischung geführt wird;
- anschließendes Evakuieren des Reaktors auf einen Gesamtdruck von < 10 mbar nach weitgehendem Abschluß der Reaktion und anschließendes Fluten desselben mit Stickstoff oder einem stickstoffabgebendem Gas auf einen Druck zwischen 50 und 1000 mbar, wobei dabei die Temperatur im Reaktionsprodukt auf 2000 °C bis 2400 °C ansteigen kann;
- Mehrmaliges Wiederholen des Evakuier- und Flutzyklus;
- Abkühlen des Reaktorinhalts.

Ein enges Kornspektrum liegt üblicherweise dann vor, wenn der Korngrößenfaktor zwischen dem d₁₀ und d₉₀ Punkt etwa weniger als 20 beträgt, beispielsweise d₁₀ 0,5µm, d₉₀ 10µm. Die Ermittlung des Kornspektrums kann im grobkörnigen Bereich mittels Bildanalyse an REM-Bildern und im feinkörnigen Bereich mittels Sedimentationsanalyse am Sedigraph erfolgen.

Ein Siebboden am Reaktionsgefäß und die darunter- oder darüberliegende, gegenüber dem Ofenraum gasdicht abgeschlossene Einströmkammer soll die Strömung des Stickstoffs während der Glühbehandlung durch die Ansatzmischung gewährleisten, wobei im darüber- oder darunterliegenden Ofenraum ein möglichst gutes Grob-oder Feinvakuum im Bereich von etwa 1 bis 40 mbar herrschen soll. Der durch den Ansatz fließende Stickstoffstrom und die später beschriebenen Evakuier- und Flutzyklen sind für den Erfolg des erfindungsgemäßen Verfahrens entscheidend. Ersteres kann durch den Einströmvordruck bzw. durch die Druckdifferenz gegenüber dem evakuierten Ofenraum in weiten Grenzen variiert werden. Für eine erfolgreiche Durchführung des Verfahrens soll der Stickstoffstrom bezogen auf die sich während der Reaktion laufend ändernde spezifische Oberfläche der Reaktionsmischung im Bereich von 0,1 bis 5 cm³/m² und Stunde bzw. bezogen auf die Masse der Reaktionsmischung zwischen 0,2 und 5 Liter pro Minute und Kilogramm, vorzugsweise zwischen 0,5 und 2 Liter pro Minute und Kilogramm, betragen. Je nach Art des verwendeten Reaktors kann der Stickstoffstrom durch die Reaktionsmischung geführt werden oder auch, falls diese in dünnen Schichten oder als Pellets bzw. Briketts vorliegt über diese hinweg geführt werden. In jedem Fall muß sichergestellt werden, daß die Reaktionsprodukte wie CO und dgl. sehr rasch abgeführt werden. Nach weitgehendem Abschluß der Reaktion bei einer Temperatur um 1800 °C ist der Stickstoffstrom zu unterbrechen und der Reaktor vorzugsweise auf < 1 mbar zu evakuieren. Dabei verliert das Nitrid, Carbonitrid oder Mischkarbonitride einen Teil des gebundenen Stickstoffs. Bei der darauffolgenden Flutung mit Stickstoff oder einem stickstoffabgebenden Gas erfolgt wieder die Nitridierung verbunden mit einer starken Wärmetönung, die kurzzeitig im Reaktionsprodukt eine starke Temperaturerhöhung bewirkt. Durch mehrmaliges Wiederholen des Evakuier- und Flutzyklus läßt sich ein Kornwachstum erreichen, ohne daß gravierende negative Sintererscheinungen im Reaktionsprodukt auftreten, die eine entsprechend aufwendige Mahlung des Produkts notwendig machen. Das erfindungsgemäß hergestellte Produkt zeichnet sich demnach durch eine sphärische Kornform, welche die Verarbeitbarkeit positiv beeinflußt, enges Kornspektrum und einer durchschnittlichen Korngröße von > 2 µm, vorzugsweise > 3 µm aus und eignet sich hervorragend für den Einsatz in grobkörnigen Cermetssorten und für den gemischten Einsatz mit fein- und submikronen Hartstoffpulvern.

Im Gegensatz zum in der EP 0 447 388 beschriebenen Verfahren nach dem Stand der Technik, bei welchem nur die Ausgangsmischung aus Metalloxiden und kohlenstoffhaltigem Stoff einem geringeren Druck ausgesetzt und mit Stickstoff geflutet wird, ist beim erfindungsgemäßen Verfahren auch das Nitrid-Reaktionsprodukt Evakuation und Flutung ausgesetzt, wodurch das gewünschte Kornwachstum ohne verstärktes Sintern des Reaktionsproduktes erreicht wird.

Bei der eigentlichen Durchführung des Verfahrens wird nach Einführen des mit der Oxid- und Kohlenstoffmischung gefüllten Reaktionsgefäßes in dem mit einer Heizung ausgestatteten evakuierbaren Kessel dieser zur Entfernung des Sauerstoffs ausgepumpt und mehrmals mit Stickstoff geflutet. Nach Erreichung eines Vakuums von < 1 mbar wird mit dem Aufheizen begonnen. Ab einer Temperatur von ca. 800 bis 1000 °C setzt die Reduktion der oder des Oxides ein. Gleichzeitig damit wird mit dem Einleiten des Stickstoffs und Abpumpen der Reaktionsgase begonnen. Die möglichst vollständige Reduktion der Oxide bzw. Umwandlung der Metall, Carbid und/oder Nitrideinsätze gewährleistet eine längere Haltezeit bei 1500 bis 1600 °C unter strömenden Stickstoff. Um den Sauerstoffinhalt im Produktauf Werte von < 0,5 % abzusenken, ist die Erhöhung der Temperatur auf ca. 1800 °C erforderlich, wobei die Haltezeit bei dieser Temperatur 1 bis 2 Stunden betragen soll. Das Halten kann auch in Stufen bei verschiedenen Temperaturen im angegebenen Temperaturbereich durchgeführt werden. Im Anschluß an diese Haltezeit wird der Reaktor auf < 1 mbar evakuiert und gleich darauf oder nach einer Haltezeit von 10 bis 20 Minuten mit Stickstoff bis zu einem Gesamtdruck von 1000 mbar, vorzugsweise bis 500 mbar, geflutet, wobei besonders bevorzugt der Druck zwischen 100 bis 200 mbar betragen kann. In Abhängigkeit von der angestrebten durchschnittlichen Größe der Pulverpartikel wird dieser Evakuier- und Flutzyklus beliebig oft wiederholt. In der Praxis hat sich gezeigt, daß 3 bis 5 Zyklen zur Erreichung einer Korngröße um 4 µm ausreichend sind.

Neben der Einbringung der Reaktionsmischung in Form von Pellets oder Briketts in den Reaktor kann die Einbringung auch durch Pressen oder Stampfen erfolgen. Dabei kann eine bedeutend bessere Entgasung und Durchflutung der Reaktionsmischung mittels einer Vielzahl von Kanälen erreicht werden.

Die nach dem Erkalten des Ofeninhalts gewonnenen Produkte haben eine durchschnittliche Korngröße von über 2 µm, vorzugsweise über 3 µm und weisen ein enges Kornspektrum auf. Die Sauerstoffgehalte bewegten sich im Bereich von 0,05 bis 0,5 %, der Gehalt an freiem Kohlenstoff ist kleiner als 0,1 Gew.%. Eine leichte Nachvermahlung ist nur zur Beseitigung von Agglomeraten notwendig.

Die Materialien und das erfindungsgemäße Verfahren sollen anhand von Beispielen, die nicht einschränkend sein sollen, näher dargestellt werden.

### Beispiel 1

Ein Reaktionsgemisch bestehend aus 72,8 Teilen Titanoxid und 27,2 Teilen Flammruß wurden in einem Pflugscharmischer gut gemischt und die Mischung in einem Behälter aus Graphit mit Siebboden eingestampft. Nach Anbringen einer Vielzahl von Gaskanälen wurde der Graphitbehälter auf die innerhalb einer Widerstandsheizung montierte Einströmkammer gasdicht aufgesetzt. Anschließend schloß man den Kesseldeckel und evakuierte den Kesselinhalt vorsichtig zur Entfernung des Sauerstoffes auf < 1 mbar, wobei zwischendurch zweimal mit Stickstoff gespült wurde. Bei einem Druck im Kessel von 1 bis 10 mbar Stickstoff begann man mit den Aufheizen des Reaktors. Die Aufheizgeschwingigkeit betrug 10 bis 20 °C/ Min. Ab einer Temperatur von 800 bis 1000 °C zeigte allmählicher Druckanstieg die beginnende Reduktion des Oxids an. Ab diesen Zeitpunkt wurde mit dem Absaugen der Reaktionsgase begonnen, während gleichzeitig ein Stickstoffstrom von 1 l/min. durch das Reaktionsgemisch geleitet wurde. Der Gesamtdruck im Kessel erreichte fallweise Werte bis zu 50 mbar. Durchschnittlich lag er um 10 mbar. Nach Erreichen einer Temperatur um 1600 °C wurde dieser Temperaturbereich 5 Stunden lang gehalten. Anschließend wurde die Temperatur auf 1800 °C erhöht und in diesem Temperaturbereich weitere 1,5 Stunden gehalten, wobei laufend Stickstoff durch den Ansatz geführt wurde.

Im Anschluß daran wurde der Kesselinhalt auf einen Gesamddruck von < 1 mbar evakuiert und daraufhin mit Stickstoff auf etwa 100 mbar geflutet. Dieser Vorgang wurde viermal wiederholt. Das Abkühlen des im Reaktor vorliegenden Produkts erfolgte unter Stickstoff bei ca. 800 mbar.

Das ausgebrachte Produkt hatte folgende chemischen und physikalischen Eigenschaften:
- % C ges.: 11,7
- % C frei: <0,05
- % N: 9,1
- % O: 0,12
- durchschnittliche:
- Korngröße in µm: 4,2

Zur Beseitigung der Agglomerate wurde das Produkt 30 Minuten lang im Laborattritor mit Hartmetallkugelfüllung unter Benzin gemahlen. Das nach Entfernung der Mahlflüssigkeit im Vakuumtrockner erhaltene Pulver hatte folgende Qualitätskennzahlen:
- % C ges.: 11,7
- % C frei: <0,05
- % N: 9,2
- % O: 0,15
- % W: 0,2
- % Fe: <0,01
- durchschnittliche:
- Korngröße in µm: 4,0

Aufgrund der Morphologie der Pulverpartikel, des Sauerstoffinhalts und der Korngröße ist das erfindungsgemäße Produkt hervorragend zur Herstellung von Cermets mit gemischter Korngrößenstruktur oder grobkörnigen Qualitäten geeignet.

### Beispiel 2

Wie im Beispiel 1 wurde ein Reaktionsgemisch bestehend aus 51,2 Teilen Titanoxid, 29,3 Teilen Wolframmetallpulver und 19,5 Teilen Flammruß im Pflugscharmischer gut gemischt, die Mischung in einen Behälter aus Graphit mit Siebboden eingestampft und mit Gaskanälen versehen. Die weitere Durchführung der Reaktion war ebenfalls der von Beispiel 1 sehr ähnlich, lediglich die Haltezeit bei 1600 °C wurde auf 4 Stunden reduziert.

Das aus Beispiel 2 erhaltene Produkt hatte folgenede chemischen und pysikalischen Eigenschaften:
- % C ges.: 9,9
- % C frei: 0,05
- % N: 4,1
- % O: 0,3
- % W: 41,3
- % Ti: Rest
- durchschnittliche:
- Korngröße µm: 5,6

Das nach der Deagglomeration im Laborattritor erhaltene Produkt hatte nachstehende Qualitätskenndaten:
- % C ges.: 10,0
- % C frei: 0,05
- % N: 4,2
- % O: 0,4
- % W: 41,5
- % Fe: 0,03
- % Ti: Rest
- durchschnittliche:
- Korngröße µm: 5,0

### Beispiel 3

60,9 Teile Titanoxid, 6,66 Teile Tantaloxid, 89,7 Teile Wolframoxid und 25,6 Teile Flammruß wurden wie im Beispiel 1 gut gemischt und mit einem Preßdruck von 5 t/cm³ zu Tabletten verpreßt.Die weitere Verfahrensweise im Reaktor und die Deagglomeration im Attritor erfolgte wie im Beispiel 1. Das Endprodukt hatte folgende chemischen und physikalischen Eigenschaften:
- % C ges.: 9,7
- % C frei: 0,05
- % N: 8,9
- % O: 0,2
- % W: 9,5
- % Ta: 9,4
- % Fe: 0,01
- durchschnittliche:
- Korngröße in µm: 4,5

Nach den Ergebnissen der Beispiele 1 bis 3 sind nach dem erfindungsgemäßen Verfahren Carbonitride des Titans mit gegebenenfalls Zusätzen weiterer Metalle der IVa-, Va- und VIa-Gruppe des Periodensystems herstellbar, die sich aufgrund ihrer sphärischen Kornform, engem Kornspektrum, geringem Sauerstoffinhalt und einer durchschnittlichen Korngröße von > 2 µm auszeichnen.

## Patentansprüche

1. Verfahren zur Herstellung eines sphärischen Nitrid und/oder Carbonitridpulvers des Titans und gegebenenfalls weiterer Metalle der IVa-, Va- und VIa- Gruppe des Periodensystems mit einer Korngröße von durchschnittlich mehr als 2 µm und einem engen Kornspektrum, das folgende Schritte enthält:
- Einbringen eines Reaktionsgemisches bestehend aus Titan und gegebenenfalls anderen Metalle der IVa-, Va- und VIa- Gruppe des Periodensystems in Form ihrer Oxide, Metalle, Carbide, Nitride und/oder Carbonitride und bei Bedarf einem kohlenstoffhältigen Stoff in den Reaktor;
- Herstellen einer Stickstoffatmosphäre im Reaktor bei vermindertem Druck;
- Erwärmen des Reaktorinhalts auf eine Temperatur zwischen 800 °C und 2400 °C, vorzugsweise zwischen 1400 °C und 2000 °C und Halten im Temperaturbereich zwischen 1400 °C und 2000 °C unter gleichzeitiger Abführung der gasförmigen Reaktionsprodukte, wobei Stickstoff oder ein stickstoffabgebendes Gas durch oder über die Reaktionsmischung geführt wird;
- anschließendes Evakuieren des Reaktors auf einen Gesamtdruck von < 10 mbar nach weitgehendem Abschluß der Reaktion und anschließendes Fluten desselben mit Stickstoff oder einem stickstoffabgebendem Gas auf einen Druck zwischen 50 und 1000 mbar;
- Mehrmaliges, vorzugsweise bis zu fünfmaliges Wiederholen des Evakuier- und Flutzyklus;
- Abkühlen des Reaktorinhalts.

2. Verfahren nach Anspruch 1, dadurch gekennzeichnet, daß der Reaktor während der Erwärmung und dem Halten der Temperatur evakuiert wird, wobei der Gesamtdruck 200 mbar, vorzugsweise 100 mbar nicht übersteigt.

3. Verfahren nach einem der Ansprüche 1 und 2, dadurch gekennzeichnet, daß während der Erwärmung und dem Halten der Temperatur kontinuierlich ein Strom aus Stickstoff oder einem stickstoffabgebenden Gas durch oder über die Reaktionsmischung geleitet wird, der zwischen 0,2 und 5 Liter pro Minute und Kilogramm Reaktionsmischung, vorzugsweise zwischen 0,5 und 2 Liter pro Minute und kg Reaktionsmischung beträgt.

4. Verfahren nach einem der Ansprüche 1 bis 3, dadurch gekennzeichnet, daß das Halten in Stufen bei verschiedenen Temperaturen durchgeführt wird.

5. Verfahren nach einem der Ansprüche 1 bis 4, dadurch gekennzeichnet, daß im Anschluß an die Haltestufen der Reaktor ein oder mehmals auf einen Gesamtdruck von < 10 mbar, vorzugsweise < 1 mbar, evakuiert und darauffolgend mit Stickstoff oder einem stickstoffabgebenden Gas auf einen Gesamtdruck bis 1000 mbar vorzugsweise bis 500 mbar geflutet wird.

6. Verfahren nach einem der Ansprüche 1 bis 5, dadurch gekennzeichnet, daß die Reaktionsmischung in den Reaktor gepreßt oder gestampft wird und anschließend zur bessern Entgasung und Durchflutung mit einer Vielzahl von Kanälen versehen wird.

7. Verfahren nach einem der Ansprüche 1 bis 5, dadurch gekennzeichnet, daß die Reaktionsmischung in Form von Pellets oder Briketts in den Reaktor eingebracht wird.

8. Verfahren nach einem der Ansprüche 1 bis 7, dadurch gekennzeichnet, daß im Anschluß an die Abkühlung eine Deagglomerierung oder Vermahlung in inerter Umgebung durchgeführt wird.

## Claims

1. A method for the production of spherical nitride and/or carbonitride powders of titanium and, optionally, further metals of the IVa, Va and VIa group of the periodic table with a grain size of more than 2 µm on the average and a narrow grain spectrum, comprising the following steps:
- the introduction into the reactor of a reaction mixture consisting of titanium and, optionally, other metals of the IVa, Va and VIa group of the periodic table in the form of their oxides, metals, carbides, nitrides and/or carbonitrides and, when required, a carbon-containing material;
- the production of a nitrogen atmosphere in the reactor at a reduced pressure;
- the heating of the content of the reactor to a temperature of between 800°C and 2400°C, preferably between 1400°C and 2000°C, and holding in the temperature range of between 1400°C and 2000°C with simultaneous removal of the gaseous reaction products, with nitrogen or a nitrogen-emitting gas being guided through or over the reaction mixture;
- the subsequent evacuation of the reactor to a total pressure of < 10 mbar following the substantial completion of the reaction and the subsequent flooding of the same with nitrogen or a nitrogen-emitting gas to a pressure of between 50 and 1000 mbar;
- multiple repetitions of the evacuation and flooding cycle, preferably up to five times;
- cooling of the reactor content.

2. A method as claimed in claim 1, characterized in that the reactor is evacuated during the heating and the holding of the temperature, with the total pressure not exceeding 200 mbar, preferably nit exceeding 100 mbar.

3. A method as claimed in one of the claims 1 and 2, characterized in that during the heating and the holding of the temperature a flow of nitrogen or a nitrogen-emitting gas is continuously guided through or over the reaction mixture, which flow is between 0.2 and 5 litres per minute and kilogram of reaction mixture, preferably between 0.5 and 2 litres per minute and kilogram or reaction mixture.

4. A method as claimed in one of the claims 1 to 3, characterized in that the holding is performed in stages at different temperatures.

5. A method as claimed in one of the claims 1 to 4, characterized in that following the holding stages the reactor is evacuated once or several times to a total pressure of < 10 mbar, preferably < 1 mbar, and thereafter flooded with nitrogen or a nitrogen-emitting gas to a total pressure of up to 1000 mbar, preferably up to 500 mbar.

6. A method as claimed in one of the claims 1 to 5, characterized in that the reaction mixture is pressed or stamped into the reactor and thereafter is provided with a plurality of ducts for improved degassing and flooding.

7. A method as claimed in one of the claims 1 to 5, characterized in that the reaction mixture is introduced into the reactor in form of pellets or briquettes.

8. A method as claimed in one of the claims 1 to 7, characterized in that a deagglomeration or grinding is performed in an inert environment after the cooling.

## Revendications

1. Procédé pour la préparation d'une poudre sphérique de nitrure et/ou de carbonitrure du titane et éventuellement d'autres métaux des groupes IVa, Va et VIa de la Classification Périodique des Eléments, ayant une granulométrie en moyenne supérieure à 2 µm et un spectre granulométrique étroit, qui comprend les étapes suivantes :
- introduction d'un mélange réactionnel constitué de titane et éventuellement d'autres métaux des groupes IVa, Va et VIa de la Classification Périodique des Eléments sous forme de leurs oxydes, métaux, carbures, nitrures et/ou carbonitrures et, si nécessaire, d'une substance contenant du carbone, dans le réacteur ;
- réalisation d'une atmosphère d'azote dans le réacteur sous pression réduite ;
- chauffage du contenu du réacteur à une température comprise entre 800°C et 2400°C, de préférence entre 1400°C et 2000°C, et maintien dans le domaine de températures entre 1400°C et 2000°C, avec extraction simultanée des produits réactionnels gazeux, de l'azote ou un gaz libérant de l'azote étant introduit à travers ou au-dessus du mélange réactionnel ;
- évacuation subséquente du réacteur à une pression totale inférieure à 10 mbar après arrêt complet de la réaction, et submersion subséquente de celui-ci avec de l'azote ou un gaz libérant de l'azote à une pression entre 50 et 1000 mbar;
- répétition à plusieurs reprises, de préférence jusqu'à cinq fois, du cycle d'évacuation et de submersion ;
- refroidissement du contenu du réacteur.

2. Procédé selon la revendication 1, caractérisé en ce que le réacteur est évacué pendant le chauffage et le maintien de la température, la pression totale ne dépassant pas 200 mbar, de préférence 100 mbar.

3. Procédé selon l'une des revendications 1 et 2, caractérisé en ce que pendant le chauffage et le maintien de la température, un courant d'azote ou d'un gaz libérant de l'azote est introduit en continu à travers ou au-dessus du mélange réactionnel, lequel courant est compris entre 0,2 et 5 litres par minute et kilogramme de mélange réactionnel, de préférence entre 0,5 et 2 litres par minute et par kg de mélange réactionnel.

4. Procédé selon l'une des revendications 1 à 3, caractérisé en ce que le maintien est effectué par étapes, à différentes températures.

5. Procédé selon l'une des revendications 1 à 4, caractérisé en ce qu'à la suite des étapes de maintien du réacteur, on évacue une ou plusieurs fois à une pression totale inférieure à 10 mbar, de préférence inférieure à 1 mbar, et en ce qu'à la suite de cela, on submerge avec de l'azote ou un gaz libérant de l'azote à une pression totale allant jusqu'à 1000 mbar, de préférence jusqu'à 500 mbar.

6. Procédé selon l'une des revendications 1 à 5, caractérisé en ce que le mélange réactionnel est comprimé ou compacté dans le réacteur et muni ensuite d'un grand nombre de canaux pour améliorer le dégazage et la circulation du fluide.

7. Procédé selon l'une des revendications 1 à 5, caractérisé en ce que le mélange réactionnel est introduit dans le réacteur sous forme de paillettes ou de briquettes.

8. Procédé selon l'une des revendications 1 à 7, caractérisé en ce qu'après le refroidissement, une désagglomération ou un broyage est effectué dans un environnement inerte.
